# FASCICULE DE BREVET EUROPEEN

(11) **EP 1 361 916 B1**
(45) Date de publication et mention de la délivrance du brevet: **16.01.2008**
(21) Numéro de dépôt: 02704838.8
(22) Date de dépôt: 14.02.2002
(51) Int. Cl.: B01D 53/22

(54) **STRUCTURES COMPOSITES DE MEMBRANES SELECTIVEMENT PERMEABLES A L'HYDROGENE ET PROCESSEURS DE GAZ COMBUSTIBLES EN FAISANT USAGE**
SELEKTIVE, WASSERSTOFFDURCHLÄSSIGE MEMBRANVERBUNDSTRUKTUREN UND BRENNGASPROZESSOR UNTER VERWENDUNG DERSELBEN
COMPOSITE STRUCTURES OF MEMBRANES THAT ARE SELECTIVELY PERMEABLE TO HYDROGEN AND COMBUSTIBLE GAS PROCESSORS USING SAME

(30) Priorité: 19.02.2001 FR 0102219
(43) Date de publication de la demande: 19.11.2003
(73) Titulaire: Compagnie Européenne des Technologies de l'Hydrogène (CETH), 91460 Marcoussis (FR)
(72) Inventeur: ETIEVANT, Claude, F-78000 Versailles (FR); GAILLARD, Fanny, F-91620 Nozay (FR); DE LAPPARENT, Dominique, F-75116 Paris (FR); LE CREN, Roger, F-94130 Nogent Sur Marne (FR); POINTET, Karine, F-91360 Villemoisson Sur Orge (FR)
(74) Mandataire: de Saint-Palais, Arnaud Marie
(86) Numéro de dépôt international: PCT/FR2002/000578
(87) Numéro de publication internationale: WO 2002/066144

(56) Documents cités:
- EP-A- 0 652 042
- EP-A- 0 783 919
- WO-A-99/30806
- US-A- 5 498 278

## Description

L'invention se rapporte à des perfectionnements aux structures composites de membranes sélectivement perméables à l'hydrogène, susceptibles d'être utilisées dans les processeurs de combustibles gazeux pour produire de l'hydrogène pur. Elle concerne également des perfectionnements apportés à ces mêmes processeurs, du fait de l'emploi de structures composites ainsi réalisées.

On sait, d'une manière générale, que pour obtenir un flux de gaz élevé à travers une membrane de filtration sélective, il est nécessaire de simultanément satisfaire les quatre conditions suivantes:
- le matériau constitutif de la membrane doit être très sélectif et très perméable au gaz à extraire ;
- la membrane doit être aussi mince que possible, le flux de gaz filtré étant une fonction inverse de son épaisseur ;
- la différence des pressions partielles du gaz à prélever doit être aussi élevée que possible entre l'amont et l'aval de la membrane, l'efficacité de la filtration dépendant directement de cette différence de pressions ;
- la surface de la membrane doit être aussi grande que possible.

Par ailleurs, on sait également que dans le cas particulier des processeurs de gaz combustibles, la température dans la chambre de réaction est élevée (généralement de 300 à 600 °C) et que, de ce fait, le seul matériau réellement efficace pour la réalisation d'une membrane, destinée à opérer dans cette plage de températures, est du palladium ou un alliage à base de palladium, dont il est nécessaire pour des raisons économiques évidentes de diminuer la quantité totale.

En outre, dans le cas des générateurs d'hydrogène pur aisément transportables, que recherche l'industrie automobile pour construire des voitures à traction électrique, équipées de piles à combustible du type à membranes échangeuses de protons (PEM), il est impératif que, pour les puissances de 50 à 100 kW électriques nécessaires, le volume total occupé par les structures composites de membranes, et donc par la chambre de réaction où elles sont installées, soit aussi réduit que possible.

Afin de réaliser des membranes aussi minces que possible et cependant relativement grandes, différents chercheurs ont proposé de fabriquer des structures composites, constituées d'une couche mince de palladium ou d'alliage de palladium, déposée sur un substrat rigide perméable, résistant à la pression du milieu.

Le brevet US 2.958.391, accordé à A.J. Derosset, décrit une structure composite de membrane sélectivement perméable à l'hydrogène qui comprend une couche mince de palladium ou d'alliage de palladium, directement déposée sur un substrat métallique fritté poreux, en forme de plaque ou de cylindre allongé. En principe, seul l'hydrogène filtre à travers la membrane formée par la couche mince et pénètre dans le substrat poreux perméable, relié à un conduit collecteur. Ce type de structures a pour avantage évident, dès lors que la couche de filtration est suffisamment épaisse pour être réellement efficace et que le substrat fritté possède une résistance mécanique suffisante malgré sa porosité, de satisfaire les quatre conditions énoncées plus haut.

Ce type de structures présente cependant quelques défauts. Le premier est le risque de laisser se former des micro-trous dans la couche mince filtrante, du fait de la rugosité relativement importante de la paroi du substrat. Une telle rugosité résulte de la taille relativement importante des grains métalliques utilisés qui est imposée par la perméabilité minimale recherchée pour le substrat poreux. Le deuxième a son origine dans le fait que le document ne prévoit pas, pour constituer le substrat, de choisir un métal présentant un coefficient de dilatation thermique compatible avec celui, relativement faible (à savoir 11,8 10⁻⁶/°C pour le palladium), de la couche de filtration. Cela, afin de ne pas diminuer la sélectivité de la perméabilité de cette couche, en y provoquant des micro-fissures, dues à des dilatations différentielles dommageables.

En outre, dans le cas où le mélange gazeux, comprenant l'hydrogène à filtrer, est à une température et une pression élevées, les six conditions nécessaires visées ci-dessus ne sont pas suffisantes pour une structure comprenant une couche de filtration déposée sur un substrat. En effet, il faut également qu'aux températures et aux pressions élevées en question (généralement de 300 à 600 °C et de 5 à 15 bars), le métal de la couche filtrante ne diffuse pas dans le métal du substrat, ce qui aurait pour conséquence de notablement diminuer la perméabilité sélective de la membrane à l'égard de l'hydrogène. Ce qui signifie aussi qu'il est impératif que les deux métaux en contact soient chimiquement stables l'un par rapport à l'autre, aux températures et pressions concernées.

Le brevet US 5.498.278 accordé à D.J. Edlund propose une solution à ces différents problèmes. Pour cela, la structure composite décrite comprend trois éléments : (1) une couche intermédiaire poreuse souple, non frittée, texturée, stable aux points de vue chimique et thermique, disposée entre (2) une couche métallique mince, sélectivement perméable à l'hydrogène, par exemple, en palladium ou en un alliage de palladium, d'argent et/ou de nickel, et (3) un substrat rigide perméable. La couche intermédiaire en question est une pellicule tissée ou non tissée réalisée, par exemple, en fibres d'alumine, de silice, de verre ou de carbone. Elle sépare totalement la couche filtrante extérieure du substrat rigide perméable intérieur et les rend totalement indépendants l'un de l'autre. Toute considération de compatibilité directe, notamment chimique ou thermique, entre le matériau de la couche filtrante et celui du substrat est, en principe, écartée parce que pratiquement inutile, du fait de la présence de cette couche intermédiaire particulière faisant office de barrière. Le substrat pourra en conséquence être plus ou moins quelconque et, par exemple, être réalisé en métal plein ou en céramique dense, rendu perméable par des découpes ou des perforations. Dans une telle structure, la couche filtrante et la couche intermédiaire souple ont, d'après le document, une efficacité maximale lorsqu'elles comportent des micro-ondulations dans deux directions orthogonales qui leur permettent d'opérer comme des micro-soufflets, adaptés à absorber tout déplacement différentiel par rapport au substrat. De telles dispositions présentent toutefois un défaut majeur qui est la conséquence directe de la nature non-métallique de la couche intermédiaire. En effet, cela rend impossible toute vraie soudure de la couche filtrante métallique et de la couche intermédiaire qui ne l'est pas. La fixation réciproque de ces deux couches de natures différentes ne peut être qu'une sorte de collage à efficacité et stabilité relatives. Dans ces conditions, à la fin d'une durée d'utilisation relativement courte, comportant des périodes d'arrêt et de fonctionnement successives, la couche de filtration, qui subit des contractions et des expansions thermiques relativement importantes par rapport à celles, pratiquement nulles, de la couche intermédiaire, se décollera inévitablement de son support et deviendra rapidement fragile, puis fissurée et finalement inopérante. Une situation identique se présenterait si le corps du substrat et la couche intermédiaire étaient, l'un et/ou l'autre, réalisés en céramique, par ailleurs fragile et cassante.

Le premier objet de l'invention est de réaliser une structure composite de membrane sélectivement perméable à l'hydrogène, comprenant une couche mince de filtration déposée sur un substrat poreux rigide, qui conserve ses qualités constitutives, à pressions et températures élevées, en présence d'un mélange gazeux incluant de l'hydrogène.

Le deuxième objet de l'invention est de réaliser de telles membranes et de tels substrats qui, en présence d'hydrogène, soient compatibles entre eux, du point de vue chimique aussi bien que thermique.

Le troisième objet de l'invention est de réaliser de telles structures composites de membranes qui aient à la fois, de grandes surfaces, de faibles volumes individuels et des formes susceptibles d'être aisément adaptées à leurs conditions particulières d'emploi.

Le quatrième objet de l'invention concerne différents types de processeurs de combustibles gazeux, adaptés à optimiser leur fonctionnement grâce à l'usage de telles structures de membranes.

Selon l'invention, une structure composite perfectionnée de membrane sélectivement perméable à l'hydrogène, constituée par une couche continue ultra-mince de filtration, mesurant quelques microns d'épaisseur, réalisée en palladium ou en un alliage à base de palladium, déposée sur un substrat poreux réfractaire rigide, relié à un conduit collecteur de l'hydrogène extrait, est caractérisée en ce que :
- ledit substrat comprend un corps métallique fritté, pourvu d'une relativement bonne résistance mécanique et de pores ouverts mesurant de quelques microns à environ dix microns ;
- une couche métallique mince frittée, dite couche intermédiaire, mesurant environ vingt à cinquante microns d'épaisseur et enfermant des pores ouverts inférieurs au micron, est déposée sur le corps dudit substrat ;
- le corps du substrat et la couche intermédiaire sont réalisés en un ou en des alliages dotés de coefficients de dilatation thermique et d'expansion en présence d'hydrogène, qui sont tous deux compatibles avec ceux du palladium;
- le matériau constituant la couche intermédiaire présente, dans la plage des températures d'utilisation de la structure, une stabilité chimique satisfaisante à l'égard de la couche de filtration et du corps du substrat.
   Selon une caractéristique complémentaire, les coefficients de dilatation thermique des matériaux constituant le corps du substrat et la couche intermédiaire, sont inférieurs ou, au plus, peu supérieurs à celui du matériau constituant la couche de filtration.
   Selon un ensemble de caractéristique complémentaires,
- la couche ultra-mince de filtration est réalisée en un alliage à base de palladium, incluant de l'argent et/ou du nickel;
- le corps du substrat est réalisé à partir d'une poudre relativement fine, à granulométrie appropriée, formée à partir d'un superalliage à très faible coefficient de dilatation thermique, de préférence à base de nickel, de chrome et de fer ;
- la couche intermédiaire est réalisée à partir d'une poudre ultra-fine, à granulométrie appropriée, de nickel ou d'un super-alliage semblable à celui utilisé pour le corps du substrat ;
- ladite couche de filtration est fixée par des micro-soudures aux grains superficiels de ladite couche intermédiaire.

Grâce à ces dispositions, la couche de filtration est déposée sur une couche mince intermédiaire à très faible rugosité, qui en constitue un support approprié. Ce support est en effet une surface particulièrement lisse qui, en fait, est constituée de micro-grains arrondis, de formes et de tailles différentes, juxtaposés d'une manière irrégulière et soudés entre eux, au cours d'une opération de frittage (agglomération de poudres, notamment métalliques, soumises à une pression et une température appropriées). Pour que cette couche intermédiaire contiennent des pores ouverts, c'est-à-dire communiquant entre eux, mesurant au plus un micron, il faut que les grains de poudre utilisés aient une granulométrie appropriée, c'est-à-dire qu'ils aient environ trois à cinq fois la taille maximale de ces pores. Le frittage de grains, situés en dehors de cette plage, peut en effet conduire à réaliser des pores de la taille recherchée, mais plus ou moins fermés et donc relativement imperméables.

Pour effectuer le dépôt d'une couche métallique ultra-mince sur un support métallique, plusieurs techniques, connues pour leur efficacité, sont disponibles et notamment la vaporisation sous vide, l'électrolyse, l'électroless et le PVD (Physical Vapour Déposition). Dans le cas où ce support est fritté, ces techniques permettent de réaliser des micro-soudures ponctuelles, efficaces et stables, de la couche ultra-mince sur les sommets des micro-grains superficiels du support.

En utilisant des grains mesurant quelques microns, une couche intermédiaire particulièrement lisse est obtenue qui a pour effet direct de permettre de réaliser une couche de filtration ultra-mince continue, sensiblement sans aucun micro-trou, ayant une épaisseur de deux à cinq microns. Localement, cette épaisseur sera à la fois (1) proche de la dimension de l'intervalle qui existe entre les sommets de deux micro-grains superficiels juxtaposés de la couche intermédiaire et (2) supérieure à la profondeur moyenne du micro-creux qui sépare ces sommets. Cette possibilité de réaliser une couche de filtration de faible épaisseur entraîne un coût acceptable pour le palladium nécessaire à la fabrication d'une structure composite selon l'invention, à savoir un poids d'un quart de gramme et un prix, en janvier 2001, d'environ trois dollars US, pour un décimètre carré épais de deux microns.

Pour ce qui concerne la compatibilité en présence d'hydrogène du palladium et des alliages constituant le corps du substrat et la couche intermédiaire, on notera ce qui suit. En accord avec ce que dit l'ouvrage « Topics in Applied Physics (Volume 28) » - Hydrogen in Metals I, page 56, on évalue la valeur maximale du rapport C = H /M des densités de l'hydrogène atomique et du palladium dans le cadre d'utilisation de la membrane (typiquement 10 bars et 300°C) à C = 2 10⁻³, ce qui conduit à une expansion linéaire de 10⁻⁴. Des valeurs du même ordre sont calculées pour l'argent et le nickel. Il en résulte, d'une part, que les constituants des structures composites selon l'invention sont tout à fait compatibles entre eux, dans leur domaine d'utilisation usuel, et, d'autre part, que ces coefficients sont inférieurs à la dilatation thermique du palladium (environ 4.10⁻³) au cours de la montée en température de ces structures dans la chambre de réaction visée plus haut.

Pour ce qui donne la compatibilité thermique du palladium et du métal du substrat, on notera qu'elle prend une importance particulière, au cours de la montée en température de la chambre de traitement (des 20°C de l'ambiante aux 350 ou 400°C de consigne). Selon l'invention, les dilatations thermiques du corps du substrat et de la couche intermédiaire sont ou inférieures ou, au plus, très peu supérieures à celle de la couche filtrante. Cela, pour que les micro-éléments de la couche filtrante, délimités par les sommets des micro-grains auxquels ils sont soudés, ne puissent subir aucune contrainte de traction, susceptible de provoquer des micro-fissures de cette couche. Dans le cas du palladium et de l'Inconel 600 (super-alliage à base de nickel, de chrome et de fer), les coefficients de dilatation thermique, sont de 11,8 10⁻⁶/°C pour le premier et de 11,5 10⁻⁶/°C pour le second. Ce qui explique le choix privilégié de ce superalliage pour la réalisation d'une structure composite selon l'invention.

En revanche, si l'on envisageait d'utiliser de l'acier Inox 304 (cité dans de nombreuses publications comme étant un composant usuel du substrat des structures composites concernées) pour réaliser une structure selon l'invention, son coefficient de dilatation thermique de 17,4 10⁻⁶/°C notablement supérieur à celui de la couche filtrante, s'avèrerait impropre à la réalisation de structures composites, destinées à être utilisées dans une chambre de traitement telle que celles visées plus haut. Dans ce cas en effet, les micro-éléments de la couche filtrante seraient soumis à une contrainte de traction, au cours de la montée en température de la chambre de traitement et, en conséquence, pourraient présenter des micro-fissures susceptibles, à la longue, de considérablement diminuer la perméabilité sélective de la couche filtrante à l'égard de l'hydrogène.

En plus de la compatibilité thermique du palladium et de l'Inconel commentée plus haut, leur compatibilité chimique relative, c'est-à-dire leur vitesse négligeable de diffusion intermétallique, dans la plage des pressions et des températures de fonctionnement usuel des structures composites de filtration sélective de l'hydrogène selon l'invention, est également assurée. Cela résulte de propriétés expérimentalement constatées de l'Inconel, du nickel et de certains superalliages de nickel, incluant du chrome et du fer.

Selon une première forme de réalisation d'une structure composite selon l'invention, ledit substrat est un bâtonnet cylindrique pourvu à une extrémité d'un collier d'évacuation de l'hydrogène extrait et, le cas échéant, équipé d'un collier d'alimentation en gaz vecteur à l'autre extrémité, lesdits colliers ainsi que leurs cordons de soudure sont réalisés en des métaux compatibles avec le matériau du substrat et stables vis à vis de l'hydrogène.

Selon une deuxième forme de réalisation de l'invention, ledit substrat est une plaque enchâssée étanche dans une bordure métallique, compatible avec le matériau du substrat, pourvue d'un orifice relié audit conduit d'évacuation et, le cas échéant, muni d'un autre orifice opposé au précédent, relié à un conduit d'alimentation en gaz vecteur.

Selon une première application importante de l'invention ci-dessus, un processeur de gaz combustible, dans lequel une chambre de réaction à plasma froid, alimentée dans des conditions adéquates par un mélange primaire dudit gaz , de vapeur d'eau et d'air, produit un mélange secondaire formé d'hydrogène, de monoxyde et de dioxyde de carbone, est caractérisé en ce que :
- ladite chambre comporte plusieurs desdites structures de membranes sélectivement perméables à l'hydrogène, lesquelles ont une forme et des dimensions données et sont reliées à un conduit commun de collecte d'hydrogène ;
- au proche voisinage de ces structures, sont disposées des électrodes pourvues d'une gaine isolante réfractaire, à fort coefficient diélectrique, lesquelles ont une forme et des dimensions appropriées leur permettant de coopérer efficacement avec lesdites structures, pour constituer un ensemble adapté à produire, en réponse à une alimentation électrique appropriée, des décharges électriques barrières générant ledit plasma froid dans les espaces séparant électrodes et structures.

Grâce à ces dispositions, il est possible de réaliser des structures perfectionnées de membranes sélectivement perméables à l'hydrogène, qui comportent un substrat adéquat leur permettant de satisfaire simultanément toutes les spécifications les concernant. Quant aux formes à donner à ces structures, on notera dès à présent que des bâtonnets longs et minces, équipés d'une armature axiale adéquate, permettent de réaliser des structures en forme de grilles relativement grandes, particulièrement intéressantes. De telles grilles peuvent en effet, être aisément associées à des électrodes isolées ayant la même forme et les mêmes dimensions, pour optimiser la chambre de réaction à plasma froid d'un processeur de gaz combustibles, conforme à l'enseignement de la demande de brevet international WO 98/28223, déposée par l'un des auteurs de la présente invention.

Les caractéristiques et avantages de l'invention ressortiront d'une manière plus précise de la description ci-après de formes de réalisation, données à titre d'exemples non limitatifs, en référence aux dessins annexés dans lesquels :
- les figures 1 a-b-c représentent les vues en coupe transversale de deux structures en forme de bâton-nets, respectivement court et long, et de structures en forme de plaques, d'une membrane filtrante selon l'invention ;
- les figures 2 a-b représentent les vues en coupe longitudinale de deux bâtonnets courts selon l'invention ;
- les figures 3 a-b-c représentent les vues en coupes longitudinales de trois bâtonnets longs selon l'invention ;
- les figures 4 a-b représentent les vues de face de deux structures en forme de plaques, respectivement circulaire et carrée, de deux membranes filtrantes selon l'invention ;
- la figure 5 représente le schéma d'une vue en coupe transversale de la chambre de réaction d'un processeur de combustibles gazeux produisant de l'hydrogène, équipée de structures de membranes filtrantes en bâtonnets courts, selon l'invention, associées à une électrode isolée de même forme ;
- la figure 6 représente le schéma d'une vue en coupe longitudinale de la chambre de réaction d'un processeur de gaz combustibles produisant de l'hydrogène, avec un rendement amélioré, équipée de structures filtrantes en bâtonnets longs selon l'invention, associées à des électrodes isolées de même forme et à des paniers contenant un catalyseur approprié ;
- la figure 7 représente un ensemble de structures filtrantes ou d'électrodes isolées, utilisé plusieurs fois dans la chambre de réaction de la figure 6 ;
- la figure 8 représente le schéma d'une vue en coupe longitudinale d'une chambre de réaction, semblable à celle de la figure 6, équipée de structures filtrantes, en forme de plaques rectangulaires, associées à des électrodes isolées et à des paniers contenant un catalyseur approprié, également en forme de plaques rectangulaires.
- les figures 9 a-b représentent le schéma et une vue en coupe partielle d'un appareil de purification de l'hydrogène et notamment de l'hydrogène généralement disponible sur le marché.

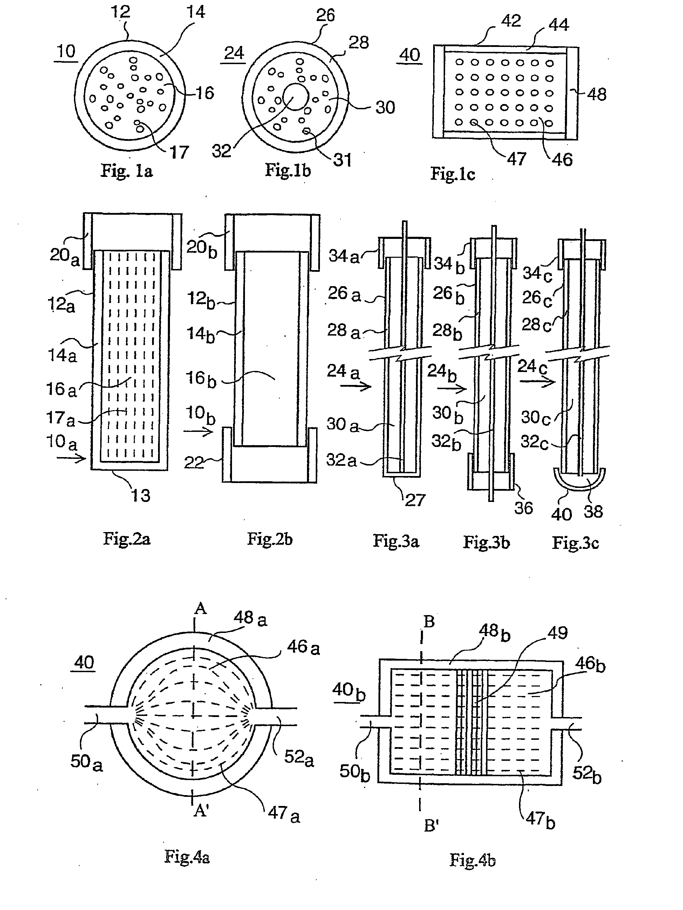

Selon les ensembles de figures 1a et 2 a-b, 1b et 3 a-b-c, 1c et 4 a-b, diverses structures de membranes sélectivement perméables à l'hydrogène (aux dimensions données ci-après, à titre d'exemples non limitatifs) sont représentées et notamment des structures 10 a-b, en forme de bâtonnets courts (diamètre 20 mm et longueur 120 mm), des structures 24 a-b-c en forme de bâtonnets longs (diamètre 8 mm et longueur 400 mm) et des structures 40 a-b, en forme de plaques circulaires ou elliptiques 40a (diamètre de 100 à 200 mm) ou rectangulaires ou carrées 40b (côté de 100 à 400 mm), ayant une épaisseur de 3 à 8 mm. Selon les figures visées ci-dessus, ces diverses structures, comprennent toutes, à partir de l'extérieur, (1) une couche métallique ultra-mince de filtration 12, 26 ou 42, (2) une couche mince intermédiaire 14, 28 ou 44 et (3) un substrat rigide fritté, 16, 30 ou 46 (fig. 1 a-b-c). La couche ultra-mince de filtration est en alliage de palladium (70 à 80 %) et d'argent (20 à 30%) et son épaisseur est de 3 à 4 microns. La couche mince intermédiaire est réalisée à partir d'une poudre ultra-fine, à granulométrie appropriée (plage de 3 à 5 microns, par exemple), en nickel ou en superalliage à base de nickel. Elle mesure jusqu'à cinquante microns d'épaisseur et enferme des pores ouverts relativement petits, inférieurs au micron, qui lui donne une surface particulièrement lisse mais une porosité et une perméabilité réduites. Le corps rigide et fritté du substrat est réalisé à partir d'une poudre relativement fine, à granulométrie appropriée (plage de 30 à 50 microns par exemple), en Inconel 600. Il enferme des pores ouverts relativement grands mesurant de quelques microns à environ dix microns, qui lui donnent une porosité et une perméabilité relativement grandes mais aussi, comme cela a été dit plus haut, une rugosité relativement importante. On notera que la composition donnée ci-dessus pour la couche de filtration 12-26-42, l'a été à titre d'exemple et qu'un alliage à base de palladium incluant de l'argent et/ou du nickel peut également convenir.

L'Inconel 600 est un superalliage inoxydable comprenant 75 % de nickel, 15,5% de chrome et 8% de fer, auxquels s'ajoutent de faibles proportions de carbone, de manganèse et de silice. La température de fusion de l'Inconel est de 1.370°C, son module d'élasticité de 200 GPa et sa limite d'élasticité en traction de 800 MPa. A titre de comparaison justificative, on notera que les valeurs des trois caractéristiques précédentes de l'Inconel 600 sont sensiblement égales ou légèrement supérieures à celles d'un matériau utilisé par plusieurs des auteurs des brevets visés plus haut, à savoir de l'acier inoxydable du type 304. En fait, le choix préférentiel de l'Inconel pour constituer le substrat 16-30-46 est déterminé par son coefficient de dilatation thermique très proche de celui du palladium alors que le coefficient de dilatation thermique de l'acier en question en est relativement éloigné. Comme on l'a vu plus haut, un tel coefficient rend cet acier impropre à un usage dans certaines chambres de traitement. En revanche, l'Inconel et les alliages à base de nickel connus pour leur faible coefficient de dilatation thermique conviennent à tous les types de chambres de traitement des gaz combustibles.

Selon la fig.1b, une structure 24 en forme de bâtonnet long comporte une armature axiale 32, en Inconel 600. Selon la fig.1c, une structure en plaque 40 comporte une bordure métallique 48 également en Inconel 600. Selon les fig.2 a-b et 3 a-b-c, les structures en bâtonnets courts 10 a-b ou longs 24 a-b-c comportent toutes à une extrémité, un collier 20 a-b ou 34 a-b-c, de préférence en Inconel 600, soudé à la couche mince intermédiaire 14 a-b ou 28 a-b-c, par un cordon de soudure compatible. Ces colliers 20a ou 34a des structures 10a-24a de membranes en doigt de gant (une couche ultra-mince de filtration 13 ou 27 est déposée sur la tranche d'extrémité) sont destinés à assurer à la fois l'évacuation de l'hydrogène extrait et la fixation de ces structures sur un conduit collecteur. Les structures en bâtonnets court 10b ou long 24b comportent un collier 22 ou 36, fixé à l'autre extrémité, à la place de la couche ultra-mince 13 ou 27. Ces colliers 22-36 sont prévus pour injecter un gaz vecteur neutre (azote, par exemple) dans le substrat 16 ou 30, afin d'entraîner l'hydrogène produit, au fur et à mesure de son extraction.

Selon les fig. 3 a-b-c, les structures en bâtonnets longs 24 a-b-c comportent toutes une armature axiale métallique rigide 32 a-b-c, en Inconel 600, qui leur donne la forme de crayons. Les armatures 32 a-b sont des tiges pleines de 2 mm de diamètre et l'armature 32c, une tige creuse de 3 et 1,5 mm de diamètres extérieur et intérieur. Les deux structures 24a et 24c de membranes en doigt de gant diffèrent l'une de l'autre, par le fait que l'armature axiale creuse 32c débouche dans une cavité 38 aménagée dans une coupelle 40, soudée à l'autre extrémité du bâtonnet long 24c, à la place de la couche ultra-mince 27 du crayon 24a. Cela, afin de permettre l'emploi d'un gaz vecteur de l'hydrogène extrait par une membrane en doigt de gant.

Les armatures 32 a-b-c sont elles aussi réalisées en Inconel 600 , un matériau aux caractéristiques mécaniques intéressantes, adaptées à conférer aux corps poreux perméables des structures en crayons longs 24 a-b-c qui les incorporent, une solidité et une raideur suffisantes pour en autoriser une manipulation aisée et une bonne tenue aux chocs inévitablement subis, au cours de leur utilisation dans des processeurs de gaz combustibles montés sur véhicules.

Les armatures axiales 32 a-b-c des crayons 24 a-b-c débordent des colliers de fixation 34 a-b et 34c-36 afin de pouvoir être soudés au conduit collecteur d'hydrogène pour les deux premiers et au conduit injecteur de gaz vecteur pour les deux derniers. Cette disposition a pour objet d'améliorer l'efficacité des fixations des structures.

Selon les fig. 4 a-b, les structures en plaques, circulaire 40a et rectangulaire 40b, comportent respectivement des bordures métalliques 48 a-b, dans lesquelles sont enchâssés étanches des substrats 46 a-b selon l'invention. La vue en coupe transversale de ces structures, réalisée suivant des lignes A-A' ou B-B' est représentée à la fig. 1c.

On notera que, dans le cas de plaques circulaires ou carrées de grandes dimensions (par exemple, de diamètre ou de côté supérieur à environ 10 cm), deux nappes formées de plusieurs tiges métalliques rigides relativement fines pourront, avant réalisation du substrat 46 a-b, être disposées en croix dans les bordures 48 a-b et soudées à elles, afin de jouer le même rôle que les armatures axiales 32 a-b-c des bâtonnets longs visés plus haut. Dans le cas de grandes plaques rectangulaires ou elliptiques relativement allongées, une seule de ces nappes, telle 49 sur la fig. 4b, reliant les parties centrales de leurs sections de bordures les plus rapprochées, pourra suffire.

Les bordures 48 a-b comportent chacune deux orifices opposés, reliés à des conduits 50a-52a et 50b-52b, respectivement affectés à une injection de gaz vecteur et à l'évacuation de l'hydrogène extrait. En l'absence de gaz vecteur, les conduits 50 a-b pourront être supprimés.

Les substrats 16, 30 ou 46 sont réalisés par un frittage approprié (voir plus haut), adapté à la porosité et la perméabilité recherchées, dans des moules de formes adéquates, de grains d'Inconel 600 relativement fins, à granulométrie calibrée, adaptés, à la suite de cette opération, à engendrer des corps rigides, à porosité et perméabilité élevées, enfermant des pores ouverts mesurant jusqu'à dix microns. De tels moules aux formes adéquates seront deux demi-cylindres pour les substrats en bâtonnets et deux plateaux pour les plaques, l'un de ces plateaux comportant un creux ayant une forme identique à la forme extérieure de la bordure 48 et une profondeur identique à son épaisseur.

Pour améliorer la perméabilité de ces substrats, des fils fins en matériau thermo-destructible sont préalablement disposés en plusieurs couches dans la masse de poudre métallique déversée dans le moule avant frittage. Au cours de l'opération de frittage, les fils en question sont détruits et un réseau de micro-canaux ou veinules, telles 17, 31 ou 47, est constitué, qui apparaît en points sur les figures 1 a-b-c. Les veinules 17 a-b et 47b, représentées en pointillés sur les figures 2a et 4b, sont longitudinales (celles des bâtonnets des figures 2b et 3 a-b-c ont été omises) et les veinules 47a de la fig. 4a suivent des lignes courbes reliant les orifices 50a-52a de la bordure 48a.

La couche mince intermédiaire 14 est réalisée par dépôt sur le corps 16, d'un gel approprié, contenant une poudre métallique ultra-fine, à granulométrie calibrée, en nickel ou en un superalliage à base de nickel (qui pourra être de l'Inconel 600), formée de petits grains, adaptés à engendrer, à la suite d'une opération de frittage adéquate; des pores ouverts, communiquant entre eux, inférieurs au micron. La porosité et la perméabilité de la couche mince intermédiaire 14 (laquelle mesure de 30 à 50 microns d'épaisseur) sont relativement faibles mais sa rugosité petite donne à sa surface extérieure un état particulièrement lisse qui convient tout à fait comme support pour le dépôt d'une couche métallique ultra-mince de filtration, ayant de 2 à 4 microns d'épaisseur. Cette couche ultra-mince filtrante 12 peut, en référence aux documents publiés visés plus haut, être réalisée par un dépôt de l'alliage de palladium et d'argent, effectué au moyen de toute technique adaptée à cet effet, connue pour son efficacité, notamment une de celles visées plus haut.

Grâce à la présence de la couche intermédiaire très lisse 14, la couche ultra-mince filtrante 12 est presque parfaitement continue, c'est-à-dire pratiquement sans micro-trous ou micro-fissures, ce qui la rend presque totalement imperméable à tout gaz autre que l'hydrogène, le taux d'impuretés de l'hydrogène pur ainsi filtré pouvant descendre jusqu'à environ 5 ppm, lorsque l'épaisseur de la couche de filtration est de 4 à 5 microns.

Grâce à la nature (Inconel 600) des grains métalliques utilisés pour réaliser le corps poreux 16 ainsi que pour la couche intermédiaire 14, les coefficients de dilatation thermique de ces deux composants et de la couche de filtration 12, en palladium ou en alliage de palladium et d'argent, des structures 10 a-b, 24 a-b-c et 40 a-b, sont sensiblement identiques. Ce qui minimise au mieux les problèmes de dilatation différentielle entre les composants des structures filtrantes selon l'invention, dans les chambres de réaction des processeurs de gaz combustibles, opérant à des températures pouvant varier de 300 à 600 °C. On notera par ailleurs, que cette plage de température est celle dans laquelle est maximale la perméabilité sélective à l'égard de l'hydrogène d'une couche ultra-mince, en alliage de palladium et d'argent et que cette perméabilité sélective diminue rapidement aux températures inférieures au seuil bas de cette plage.

Dans ces chambres de réaction, la pression totale peut atteindre 12 à 15 bars avec une pression partielle d'hydrogène de 3 à 6 bars environ. En aval de la couche ultra-mince filtrante 12, la pression d'hydrogène est inférieure de près de 2 bars à la pression partielle d'hydrogène existant en amont. De ce fait, la membrane ultra-mince 12 peut être soumise à une pression différentielle totale notablement supérieure à 10 bars.

Grâce au corps poreux sensiblement plein 16 et à la couche mince intermédiaire 14, qui ensemble constituent le substrat de la membrane 12 et donnent à ce substrat une résistance mécanique élevée, la pression exercée sur l'aval de cette membrane est en fait, sans aucun dommage pour la couche ultra-mince 12, appliquée en compression au substrat 16, lequel constitue un support continu pour toute la surface de la membrane. De ce fait, les structures de membranes filtrantes ultra-minces selon l'invention, peuvent présenter à la fois des surfaces importantes et des encombrements individuels réduits, tout en étant adaptées à supporter des températures et des pressions élevées.

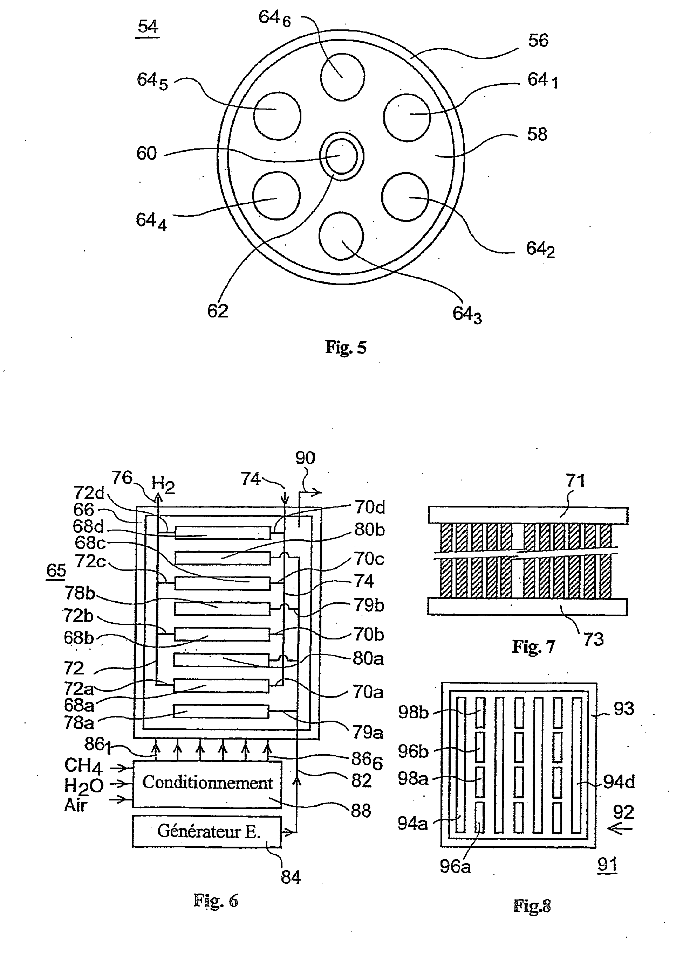

La figure 5 représente la section transversale d'une chambre de réaction à plasma froid 54 d'un processeur de gaz combustibles, générateur d'hydrogène, du genre décrit dans la demande de brevet international WO 98/28223 visée plus haut.

Selon cette fig.5, une enveloppe cylindrique 56 de 70 mm de diamètre intérieur, pourvue d'une haute isolation thermique et adaptée à supporter une pression et une température intérieures relativement élevées (10 à 15 bars et 300 à 600 °C), entoure une chambre de réaction 58. Dans cette chambre 58, est installée une électrode cylindrique axiale 60 de 200 mm de long, pourvue d'une gaine isolante 62, à fort coefficient diélectrique, en céramique de 3 mm d'épaisseur, donnant à cette électrode isolée un diamètre extérieur de 20 mm. Tout autour et à faible distance (3 mm par exemple) de cette électrode isolée 60-62, sont symétriquement disposées en cercle, six structures en bâtonnets cylindriques courts 64_{1...6}, conforme à l'un des modèles décrits aux figures 2 a-b. Ces bâtonnets ont les mêmes dimensions que l'électrode.

Les figures 6-8 représentent les schémas de vues longitudinales de deux processeurs de gaz combustibles, dont la productivité en hydrogène est notablement améliorée par l'utilisation de structures de membranes sélectivement perméables à l'hydrogène selon l'invention, associées à des électrodes isolées et à des paniers contenant un catalyseur approprié. Les dimensions des divers éléments qui constituent les chambres de réaction de ces processeurs sont bien évidemment données ci-après, uniquement à titre d'exemples non limitatifs.

Selon la figure 6, la chambre de réaction 65 d'un processeur, destiné à être installé sur une automobile, possède une enveloppe cylindrique 66, de 50 cm de diamètre et de longueur, conforme aux spécifications de l'enveloppe 56 de la figure 5. Dans cette chambre 65 sont disposées l'un après l'autre, vingt ensembles (dont quatre, 68 a-b-c-d, seulement sont représentés) de structures de membranes sélectivement perméables à l'hydrogène, selon l'invention. Ces ensembles de structures 68 ont la forme de grilles carrées de 300 mm de côté et de 8 mm d'épaisseur. Elles sont constituées par des membranes en crayons longs, du genre à deux colliers décrit à la figure 3b, dont les deux extrémités sont soudées à deux poutres creuses 70 a-b-c-d et 72 a-b-c-d, affectées à l'injection de gaz vecteur pour les premières et à la collecte d'hydrogène pour les secondes. Les poutres creuses 70 et 72 débordent de la grille et sont respectivement reliées à deux canalisations 74 et 76 qui assurent l'alimentation en gaz vecteur (azote, par exemple) pour la première et l'évacuation de l'hydrogène produit dans la chambre pour la seconde.

L'écart entre les crayons des structures 68 est faible (< 1 mm), de sorte que la surface filtrant l'hydrogène de chaque grille est un peu inférieure à trois fois la surface du carré qu'elle forme. Ces grilles 68 a-b-c-d sont rigidement fixées à un bâti non représenté, installé dans la chambre 65, et elles sont séparées les unes des autres par des intervalles de 12 mm.

Sous les grilles filtrant l'hydrogène 68 a-c, sont installées et fixées au même bâti, des électrodes 78 a-b, également en forme de grilles extérieurement identiques aux grilles 68 a-c. Ces grilles d'électrodes sont constituées de crayons longs, semblables à ceux des grilles 68 a-c, qui comportent une électrode axiale et une gaine isolante respectivement conformes aux constituants 60-62 de l'électrode isolée représentée à la figure 5. Les crayons des grilles 68 a-b et 78 a-b sont disposés en quinconce et les espaces libres qui les séparent, ont au moins 2 mm.

La figure 7 représente l'aspect extérieur des grilles de structures filtrant l'hydrogène et des grilles d'électrodes visées ci-dessus. Les grilles carrées du processeur de la figure 6 ont 30 cm de côté et comprennent chacune trente quatre crayons ayant 28 cm de long et 8 mm de diamètre, espacés les uns des autres de 0,8 mm. Les extrémités de ces crayons sont fixées à deux poutres débordantes 71 et 73 de 36 cm de long et dé 1 cm de diamètre. Dans le cas d'une grille de structures filtrantes, ces poutres 71-73 sont des conduits respectivement affectés à l'injection de gaz vecteur et à l'évacuation de l'hydrogène extrait. Dans le cas d'une grille d'électrodes isolées, les poutres 71-73 sont des conducteurs électriques isolés assurant l'alimentation de ces électrodes, une extrémité de l'un de ces conducteurs étant adaptée à établir une liaison avec un générateur. Une telle grille d'électrodes pourra tout d'abord constituer un ensemble nu, auquel un surmoulage de céramique est ensuite appliqué au cours d'une opération de frittage. En plus de leurs fonctions individuelles respectives, ces poutres 71-73 assurent également la fixation au bâti visé plus haut des deux types de grilles concernés.

Sous les grilles 68 b-d sont installés et fixés au bâti visé plus haut, deux paniers métalliques carrés 80 a-b à bordure rigide, ayant 300 mm de côté comme les grilles de filtrage 68 a-b-c-d mais une épaisseur de 10 mm, de manière que les écarts qui séparent ces paniers et ces grilles soient d'environ 1 mm. Ces paniers 80 a-b contiennent un catalyseur de type connu, formé de granulés de céramique recouverts d'un mélange d'oxydes de fer et de chrome, spécifique de la réaction dite de « water-gas shift », dans la plage de température 300 à 550°C (qui correspond à la plage d'efficacité maximale des structures filtrantes selon l'invention). Cette réaction sera présentée ci-après. Quant aux paniers, ils sont, vu leur constitution, parfaitement perméables aux gaz.

Selon la demande de brevet international WO 98/28223 visée plus haut, les électrodes 78 a-b sont connectées, par des conducteurs à haut isolement électrique 82, à un générateur 84 délivrant une très haute tension alternative (10 à 20 kV) à haute fréquence (1 MHz, par exemple), pulsée avec une période de 1 ms, par exemple.

Des conduits 86_{1...6}, installés en sortie d'une cellule de conditionnement de gaz 88, assurent l'alimentation en gaz à traiter de la chambre de réaction 65 et, à cet effet, débouchent sur des orifices régulièrement répartis au fond de l'enveloppe 66 de cette chambre. Grâce à la forme de grilles des deux électrodes 78 a-b et des quatre structures filtrantes 68 a-b-c-d ainsi qu'à la perméabilité élevée des paniers de granulés 82 a-b, les différents mélanges gazeux, qui circulent dans la chambre de réaction 65, le font dans les meilleures conditions.

Les gaz fournis par les conduits 86 constituent un mélange primaire approprié de gaz combustible (hydrocarbure ou alcool notamment), de vapeur d'eau et d'air. Ce mélange approprié est réalisé dans la cellule de conditionnement 88 qui reçoit chacun des trois gaz concernés, pour y être brassés, chauffés et comprimés, puis finalement, délivrés avec des débits relatifs et des pressions partielles adéquats, à une pression totale de 10 à 15 bars et une température de 300 à 550°C, conformes à ce que requiert la chambre de réaction 65 pour opérer dans des conditions fournissant au mieux les résultats recherchés. Une canalisation 90 assure l'évacuation du dioxyde de carbone produit dans la chambre 65.

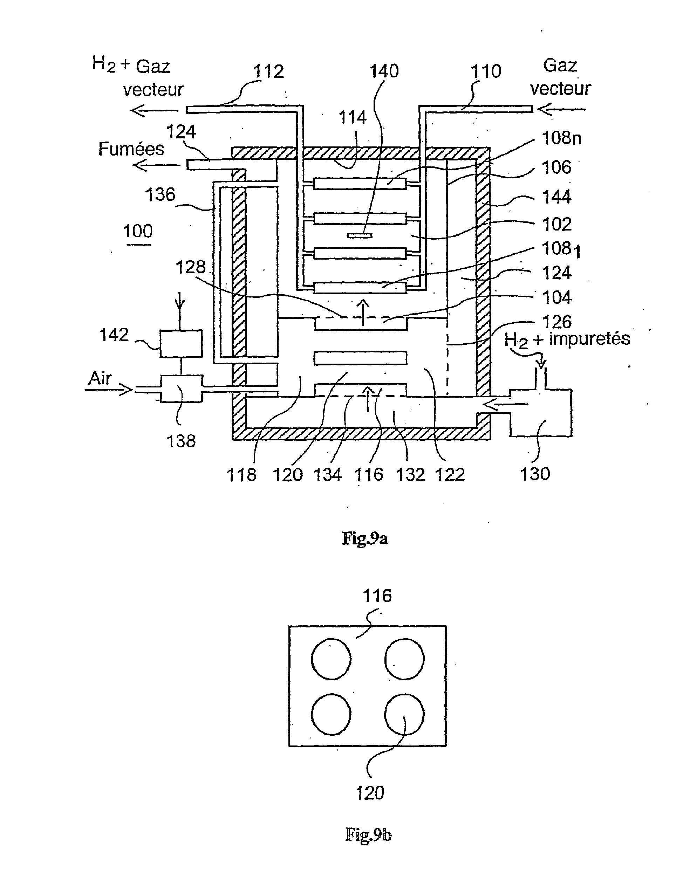

Selon la figure 8, la chambre de réaction 92 d'un processeur 91, utilisant d'autres structures filtrantes selon l'invention, est représentée. La description de cette chambre 92 ne portera que sur ce qui la distingue de la chambre 66 du processeur 65 de la fig. 6. Dans cette chambre 92, sont disposés avec des intervalles de 12 mm, deux groupes comprenant chacun vingt structures filtrantes selon l'invention (dont seulement quatre structures, 94 a-b-c-d, sont représentées) en forme de plaques rectangulaires de grandes dimensions (par exemple de 30 x 20 cm) et de 8 mm d'épaisseur, conformes à celle décrite à la figure 4b. Entre deux plaques filtrantes 94 sont alternativement disposées deux électrodes isolées, telles 96 a-b, en forme de plaques rectangulaires mesurant 15 x 20 cm et 8 mm d'épaisseur et deux paniers rectangulaires à bordure rigide perforée, tels 98 a-b, mesurant également 15 x 20 cm mais 11 mm d'épaisseur, remplis de granulés catalyseurs identiques aux précédents. Pour augmenter l'efficacité des conversions réalisées dans cette chambre de réaction, le sens de circulation du gaz vecteur dans les structures filtrantes 94 a-b-c-d et celui du mélange réactif injecté dans la chambre, seront inverses l'un de l'autre. L'ensemble de ces quarante groupes de plaques possède une section transversale carrée de 40 cm de côté et une longueur de 60 cm. Une enveloppe cylindrique 93 de 60 cm de diamètre et de 80 cm de long leur conviendra. La surface totale de ces structures de membranes ainsi rassemblées est de 960 dm². Les alimentations et les évacuations de cette chambre 92 de la figure 8, tout comme celles de la chambre 58 de la figure 5, sont identiques à celles de la chambre 65 de la figure 6. On notera que les plaques décrites disposées dans le sens de circulation des gaz, peuvent au contraire être placées perpendiculaires à ce sens, avec des passages alternativement disposés à l'une et l'autre de leurs extrémités.

La figure 9a représente le schéma en coupe longitudinale d'un appareil de purification de l'hydrogène et la figure 9b, une vue en coupe transversale de sa chambre de chauffage. L'hydrogène à purifier est notamment de l'hydrogène industriel usuel (contenant environ 10⁻⁴ d'impuretés), avec pour objectif de réduire jusqu'à 5 ppm cette proportion d'impuretés. Cet appareil 100 comprend principalement une chambre de filtration 102 et une chambre de chauffage 104. La chambre de filtration 102 comporte une enveloppe cylindrique 106, en acier inoxydable, enfermant un nombre relativement important de membranes 108_{1...n} sélectivement perméables à l'hydrogène, en forme de grilles carrées de 30 cm de côté, selon la fig. 7. Le nombre de membranes-grilles est, avec la pression, un des paramètres déterminés par le débit d'hydrogène pur à obtenir. Chacune des membranes-grilles 108 est raccordée à deux conduits 110 et 112, respectivement affectés à l'alimentation en gaz vecteur et à la collecte de l'hydrogène pur extrait, qui traversent le fond aval 114 de la chambre de filtration 102.

La chambre de chauffage 104 comprend une chaudière 116 et un brûleur 118, disposé en amont de plusieurs conduits 120, à haute conduction thermique, qui traversent la chaudière 116 (voir figure 9b) et débouchent dans une cavité 122 communiquant avec une cheminée 124 par une cloison perforée 126. La cheminée 124 constitue un conduit, à section transversale en anneau, qui entoure la paroi de la chambre de filtration 102. La chaudière 116 est séparée de la chambre de filtration 102 par une cloison mitoyenne 128, pourvue de perforations, adaptées à uniformément distribuer le flux d'hydrogène à purifier entrant dans la chambre 102. La chaudière 116 est alimentée en hydrogène à purifier par un compresseur 130 qui engendre une surpression de 4 à 10 bars et débouche dans une boîte de répartition 132, communiquant avec la chaudière 116 par une cloison perforée 134. Au voisinage du fond aval 114 de la chambre de filtration 102, un conduit 136 de récupération de l'hydrogène résiduel est branché, qui aboutit à l'entrée du foyer 118, lequel est par ailleurs alimenté en air comprimé par un compresseur 138.

Au centre de la chambre de filtration 102 est placé un thermocouple 140 relié (par des moyens non représentés) à un dispositif de régulation 142, adapté à produire un signal de contrôle du débit du compresseur d'air 138. L'ensemble formé par la chambre de filtration 102, la chambre de chauffage 104 et la cheminée en couronne 124, est calorifugé au moyen d'une gaine isolante 144, en laine de roche.

En référence aux figures 5, 6 et 8, on notera que les conditions impératives pour alimenter correctement en mélange primaire les chambres de réaction 58-65-92 décrites, ont pour objet, dans le cas d'un gaz méthane à convertir en hydrogène, de permettre à ces chambres de réaction de réaliser d'une manière optimale les conversions définies par les équations chimiques suivantes :

CH₄ + O₂ => CO₂ + 2 H₂ (1) => réaction exothermique forte

CH₄ + 2H₂O => CO₂ + 4H₂ (2) => réaction endothermique forte

CH₄ + H₂O => CO + 3 H₂ (3) => réaction endothermique modérée

CO + H₂O => CO₂ + H₂ (4) => réaction exothermique modérée

Dans le cas du réformage d'un mélange gazeux primaire contenant un alcool ou un hydrocarbure autre que le méthane, des équations analogues peuvent être écrites.

Réaliser d'une manière optimale les conversions ci-dessus signifie notamment faire en sorte que la quantité de chaleur consommée par la réaction (2) fortement endothermique soit sensiblement égale ou un peu inférieure à la quantité de chaleur dégagée par la réaction d'oxydation partielle (1) fortement exothermique. Une bonne combinaison de théorie et d'expérimentation permet d'atteindre cet objectif Il en est de même pour les deux réactions modérément exothermique (4) et endothermique (3).

Les trois conversions définies par les équations (1) - (2) - (3) sont réalisées dans toute la chambre de réaction 58 (fig.5) et dans les sections des chambres 65 et 92 (fig. 6 et 8), occupées par les structures filtrantes 68 a-b ou les sections des plaques 94 a-b-c-d associées aux électrodes isolées 78 a-b ou 96 a-b. La conversion selon l'équation (4) ci-dessus, dite de « water-gas shift », est assurée par l'action de catalyse réalisée par les granulés recouverts d'un mélange d'oxydes de fer et de chrome des paniers 80 a-b et 98 a-b des fig. 6 et 8. Les parties des plaques filtrantes 94, placées de part et d'autre à 0,5 mm des paniers 98 a-b coopèrent directement avec le catalyseur contenu dans ces paniers.

En référence aux figures 5, 6 et 8, ainsi qu'à l'enseignement de la demande de brevet international WO 98/28223 visé plus haut, grâce à la présence des gaines isolantes à fort coefficient diélectique des électrodes 60-78-96, installées au voisinage immédiat des structures filtrant l'hydrogène 64-68-96, un champ électrique HF intense de très courte durée (de 3 à 4 microsecondes) est uniformément créé d'une manière périodique (1.000 Hz), dans les espaces libres, traversés par le mélange primaire en question, qui séparent ces gaines de ces structures filtrantes. Un tel champ engendre des décharges électriques barrières dans les espaces concernés, lesquelles créent un plasma froid (petite population d'électrons à très haute énergie, noyés dans un milieu passif à température initiale modérée) qui joue le même rôle qu'un catalyseur chimique approprié. Un ensemble de réactions définies par les équations (1) - (2) - (3) ci-dessus se produit alors, dont la durée de persistance est notablement supérieure à la durée de la décharge électrique barrière qui l'a fait démarrer. Un mélange secondaire formé d'hydrogène et de gaz résiduels, comprenant principalement du monoxyde de carbone (un poison pour les piles à combustible du type PEM) et du dioxyde de carbone, est produit à cette occasion.

Les structures 64 de membranes perméables à l'hydrogène de la chambre de réaction 58 (fig.5) extraient l'hydrogène produit au fur et à mesure de sa production. Cela permet aux trois réactions (1), (2) et (3) concernées d'être réalisées au mieux, dans un encombrement particulièrement réduit. Mais cette chambre 58, dont l'architecture reprend exactement l'enseignement de la demande de brevet citée en référence, produit aussi le mélange de gaz résiduels visé plus haut, lequel mélange, malgré la capacité de produire de l'hydrogène qu'il possède encore, est, selon cet enseignement, seulement recyclé en chaleur, dans la chaudière de la cellule de conditionnement associée à la chambre de réaction.

Dans les chambres de réaction 65 et 92 des figures 6 et 8, cette capacité particulière, que possède le monoxyde de carbone, est récupérée avec une grande efficacité et un excellent rendement (par élimination de la réaction inverse et déplacement de l'équilibre chimique dans le sens d'une réaction plus complète). Cela, grâce à la présence immédiate en aval des électrodes isolées 78 a-b et 94 a-b, des paniers 80 a-b et 98 a-b, remplis de granulés catalyseurs de la réaction de « water-gas shift », selon l'équation (4) visée plus haut, installés au proche voisinage des structures de membranes filtrantes 68 a-b et 94 a-b.

On notera qu'il est aisé d'installer dans la chambre de réaction 54 de la fig.5, des structures en bâtons deux fois plus longs que ceux décrits et, au-dessus de l'électrode isolée 60-62, un panier de même forme, contenant le catalyseur approprié, pour obtenir les mêmes résultats que ceux fournis par les chambres 65 et 92.

Dans ces conditions, à partir d'un mélange primaire approprié de gaz combustible, de vapeur d'eau et d'air, les chambres de réaction 65 et 92, à encombrement relativement réduit, de processeurs, perfectionnées par l'utilisation de structures de membranes à haute pression et haute température selon l'invention, alternativement associées à des électrodes isolées et à des paniers de catalyseur adéquat, produisent, dans des canalisations d'évacuation séparées, telles 76 et 90, avec grande efficacité et donc un rendement élevé, essentiellement de l'hydrogène quasiment pur et du dioxyde de carbone (un résidu des trois composants du mélange primaire initial est toutefois généralement ajouté à ce dernier). Ce rendement élevé trouve son origine dans le fait que le monoxyde de carbone présent dans le mélange secondaire, produit par le couple formé par l'électrode isolée 78 a-b ou 96 a-b et par la structure filtrante 68 a-c ou 94 (première section), est immédiatement traité par le couple formé par le panier de catalyseur 80 a-b ou 98 a-b et par la structure filtrante 68 b-d ou 94 (seconde section) qui le suit le long du trajet des mélanges gazeux réactifs qui circulent dans la chambre de réaction.

L'hydrogène produit dans les chambres de réaction 58-65-92 est généralement destiné à être utilisé pour l'alimentation de piles à combustible du genre PEM visé plus haut. L'expérience a montré que, pour alimenter une telle pile délivrant 100 W électriques, il faut disposer d'environ 1 dm² de membranes sélectivement perméables à l'hydrogène. En conséquence, avec les six membranes en bâtonnets courts de 20 cm de long et de 2 cm de diamètre, la chambre de réaction 58 qui mesure au plus 12 cm de diamètre intérieur et 30 cm de long, peut fournir une quantité d'hydrogène suffisante pour alimenter une pile PEM produisant 750 W. Ce qui ouvre des applications intéressantes dans de nombreux domaines, notamment dans l'industrie des loisirs.

De même, avec les structures de membranes en grille 68 a-b-c-d de la figure 6, qui présentent chacune une surface totale de membrane filtrante d'environ 26 dm², il est possible de réaliser une chambre de réaction de 50 cm de diamètre et de long, enfermant dix couples électrode/structure et dix couples panier/structure, qui peut produire un débit d'hydrogène susceptible d'alimenter une pile PEM fournissant 52 kW . Ce qui correspond à la puissance électrique demandée par l'industrie automobile pour alimenter ses futurs véhicules de puissance moyenne, à pollution réduite.

Des considérations semblables peuvent bien évidemment s'appliquer à la chambre de réaction 92 de la figue 8 qui, avec un encombrement réduit, comportent des structures filtrantes en plaques, susceptibles d'alimenter une pile PEM délivrant 96 kW.

En référence aux figures 9 a-b, l'hydrogène à purifier, qui entre froid et à faible pression dans le compresseur 130, est injecté comprimé dans la boîte de répartition 132 et dans la chaudière 116. Pendant le tout début de la phase de mise en route de l'appareil de purification 100, cette chaudière 116. est elle-même froide, de sorte que la totalité de l'hydrogène ainsi injecté par le compresseur 130, traverse la chambre de filtration 102 puis le conduit de récupération 136 pour aboutir à l'entrée du brûleur 118. Il en est ainsi parce que les membranes-grilles 108_{1...n}, sélectivement perméables à l'hydrogène, qui occupent la majeure partie de la chambre de filtration 102, sont froides et ne peuvent donc opérer, leurs températures de fonctionnement étant comprises entre 300 et 550°C. Dans le brûleur 118, l'hydrogène injecté est mélangé à l'air comprimé fourni par le compres-seur 138 et le mélange est immédiatement enflammé. Les flammes traversent les conduits de chauffage 120 et les gaz de combustion sont évacués par la cheminée en anneau 124. L'hydrogène à purifier circule dans la chaudière 116 en lèchant les parois chaudes des conduits de chauffage 120. Au cours de ce parcours, il s'échauffe rapidement puis pénètre dans la chambre de filtration 102, en traversant les perforations de la cloison mitoyenne 128. Il est alors à une température située dans une plage permettant aux membranes 108 de fonctionner correctement. La chambre de filtration 102 est par ailleurs chauffée par la cheminée en anneau 124, calorifugée par la gaine isolante 144, qui l'entoure. En outre, le thermocouple 140, qui adresse un signal au dispositif 142 de contrôle de débit du compresseur d'air 138, permet de réguler à une valeur optimale la température de la chambre de filtration 102. Dès qu'il en est ainsi, de l'hydrogène pur est extrait par des membranes 108, opérant dans les meilleures conditions, puis il est évacué par le conduit collecteur 112, entraîné par le gaz vecteur introduit dans le conduit 110. L'hydrogène résiduel qui en résulte, possède un coefficient d'impuretés très supérieur à celui de l'hydrogène à purifier initialement injecté mais une pression inférieure d'au moins un ou deux bars à celle de celui-ci. Cet hydrogène résiduel est évacué par le conduit de récupération 136 et injecté dans le brûleur 118 où il est utilisé comme indiqué plus haut. De la sorte, un appareil de purification de l'hydrogène industriel usuel est réalisé, qui permet de disposer d'hydrogène pur (taux d'impureté généralement inférieur à 10 ppm), ce qui autorise son emploi pour alimenter dans les meilleures conditions des piles à combustible du type PEM.

Dans le cas où la durée du besoin d'un tel hydrogène très pur est relativement brève (quelques heures par exemple), l'appareil de purification d'hydrogène décrit aux figures 9 a-b peut être grandement simplifié. A titre d'exemple, la chambre de filtration contiendra une unique membrane, du type en bâtonnet court décrit à la figure 2b, et la chambre de chauffage contiendra une résistance électrique de chauffage, alimentée par un courant régulé en fonction de la température de la chambre de filtration, mesurée par un thermocouple. La gaine de calorifugeage sera conservée mais la cheminée sera bien entendu supprimée ainsi que le conduit de récupération des effluents de la chambre de filtration. Après une courte durée d'usage, l'hydrogène à taux d'impuretés relativement élevé, qui se trouvera alors dans la chambre de filtration, sera évacué par action sur un robinet approprié.

Au cas où le taux d'impureté irréductible de l'hydrogène très pur, produit par un appareil de purification selon la figure 9 ou par un processeur selon les figures 5, 6, 8 proviendrait essentiellement du monoxyde de carbone et serait de ce fait considéré comme encore trop important pour l'alimentation d'une pile à combustible du type PEM, le flux d'hydrogène ainsi purifié pourrait être introduit dans une chambre de traitement complémentaire, fonctionnant à des températures de 200 à 250°C, réalisant l'élimination du CO, par une catalyse appropriée bien connue de l'industrie concernée. Une telle opération peut faire appel à plusieurs types de catalyseurs et notamment à du ruthénium déposé sur des granulés d'alumine. C'est une transformation inverse (méthanation) de celle définie par l'équation chimique (3) visée ci-dessus., c'est-à-dire : CO + 3H₂ => CH₄ + H₂O. Elle ajoute à l'hydrogène pur précédemment obtenu, un mélange de méthane et de vapeur d'eau parfaitement supporté par les piles concernées.

L'invention n'est pas limitée aux formes de réalisation décrites ci-dessus.

A cet égard, on notera que des structures en bâtonnets courts ou longs, en doigt de gant ou non, peuvent, dans la même chambre de réaction, être associées à des électrodes isolées et à des paniers de catalyseur, en forme de plaques. Quant aux dimensions de ces diverses structures, elles seront principalement déterminées par des considérations de résistance des matériaux, compte-tenu de l'amplitude maximale des chocs qu'elles pourraient être amenées à subir au cours de leur utilisation.

Par ailleurs, on notera que I'Inconel 600 présenté ci-dessus à titre préférentiel, pourra être remplacé par d'autres nuances d'Inconel ou même par certains types d'Hastelloy. Ces derniers sont également des superalliages à base de nickel incorporant du chrome et du fer, dont les caractéristiques mécaniques et de stabilité chimique à haute température sont proches de celles de l'acier inoxydable et le coefficient de dilatation thermique d'au moins l'un d'entre eux, inférieur à celui du palladium, à savoir 11,3 10⁻⁶/°C.

Les structures de membranes filtrant l'hydrogène selon l'invention ne sont pas exclusivement destinées à des processeurs de gaz combustibles produisant de l'hydrogène pur. En effet, de telles structures seront avantageusement utilisées dans des processeurs de gaz combustibles réalisant les réactions ci-après :
- le vapo-réformage catalytique d'hydrocarbures ou d'alcools,
- la déshydrogénation de l'éthane,
- la déshydrogénation du propane,
- la déshydrogénation du cyclohexane,
- la déshydrogénation de l'éthylbenzène,
- la conversion du monoxyde de carbone par la réaction «water-gas shift », visée plus haut.

Les réactions de conversion ci-dessus sont réalisées en présence de leurs catalyseurs spécifiques, bien connus des industries concernées.

Dans le cas de la conversion du monoxyde de carbone, selon l'équation chimique (4) visée ci-dessus, on remarquera qu'une modification simple de l'architecture de la chambre de réaction 65 du processeur, permet de la réaliser au mieux. Cette modification consistera, d'une part, à remplacer les électrodes isolées 78 a-b par des paniers de catalyseur identiques à ceux référencés 80 a-b et, d'autre part, à supprimer le générateur électrique 84 et à remplacer l'alimentation en CH₄ de la cellule de conditionnement 88, par du CO ou par tout gaz de synthèse riche en CO et H₂. Au cas où la température dans la chambre de réaction serait comprise dans une plage de 150 à 300°C, le catalyseur utilisé serait un mélange d'oxydes de cuivre et de zinc. Mais dans ce cas, l'efficacité de structures de membranes pourvues d'une couche filtrante en palladium ou en alliage de palladium et d'argent ne serait plus maximale.

Pour adapter la chambre de réaction 92 au traitement du monoxyde de carbone, des paniers de catalyseurs aussi longs et larges que les structures filtrantes 94 a-b-c-d (ou encore des granulés de catalyseurs en vrac) seront intercalés entre ces structures, le sens de circulation du gaz vecteur dans ces structures étant l'inverse du sens du courant de gaz réactifs circulant dans la chambre.

Pour de telles réactions, l'effet bénéfique des structures de membranes filtrant l'hydrogène selon l'invention, susceptibles d'être soumises à des pressions et des températures élevées, est rappelé : élimination des réactions inverses et déplacement de l'équilibre chimique dans le sens d'une réaction plus complète de conversion du CO en CO₂ et donc augmentation importante du rendement des procédés mis en oeuvre dans ces processeurs. Cet effet augmente avec la pression et lorsque la température du mélange réactif est située dans la plage des températures optimales de fonctionnement des couches de filtration des structures selon l'invention.

Ce qui confirme tout l'intérêt pour diverses industries des structures de membranes sélectivement perméables à l'hydrogène selon l'invention, qui possèdent une couche de filtration efficace, à la fois ultra-mince et relativement étendue, qui ont un faible encombrement individuel et qui fonctionnent sans dommage à haute pression et d'une manière optimale à haute température.

## Revendications

1. Structure composite perfectionnée de membrane sélectivement perméable à l'hydrogène, (10-24-40), constituée par une couche continue de filtration (12-26-42), mesurant quelques microns d'épaisseur, réalisée en palladium ou en un alliage à base de palladium, déposée sur un substrat réfractaire poreux rigide (16-30-46), relié à un conduit (20-34-52) de collecte de l'hydrogène extrait, **caractérisée en ce que** :
- ledit substrat est un corps métallique fritté perméable, (16-30-46), pourvu d'une bonne résistance mécanique et de pores ouverts mesurant de quelques microns à environ dix microns ;
- une couche métallique mince (14-28-44), dite couche intermédiaire, mesurant environ vingt à cinquante microns d'épaisseur et enfermant des pores ouverts inférieurs au micron, est déposée sur le corps du substrat ;
- le corps du substrat et la couche intermédiaire sont réalisés en un métal ou en un alliage présentant, dans la plage des températures et des pressions d'utilisation de la structure, des coefficients de dilatation thermique et d'expansion en présence d'hydrogène qui sont tous deux compatibles avec ceux du palladium ;
- le matériau constituant la couche intermédiaire présente, dans ladite plage, une stabilité chimique satisfaisante à l'égard de la couche de filtration et du corps du substrat.

2. Structure de membrane sélectivement perméable à l'hydrogène selon la revendication 1, **caractérisée en ce que** le coefficient de dilatation thermique des matériaux constituant le corps du substrat et la couche intermédiaire, est inférieur ou, au plus, peu supérieur à celui du matériau constituant la couche de filtration.

3. Structure de membrane sélectivement perméable à l'hydrogène selon la revendication 2, **caractérisée en ce que** :
- la couche ultra-mince de filtration (12-26-42) est réalisée en un alliage à base de palladium incluant de l'argent et/ou du nickel;
- le corps fritté (16-30-46) dudit substrat est réalisé à partir d'une poudre relativement fine, à granulométrie appropriée, formée à partir d'un superalliage à base de nickel, incluant du chrome et du fer, et notamment à partir d'une poudre d'Inconel 600;
- la couche intermédiaire (14-28-44) est réalisée à partir d'une poudre ultra-fine, à granulométrie appropriée, de nickel ou d'un super-alliage semblable à celui utilisé pour le corps du substrat;
- la couche de filtration est fixée par des micro-soudures aux sommets des grains superficiels de la couche intermédiaire.

4. Structure de membrane sélectivement perméable à l'hydrogène selon l'une des revendications précédentes, **caractérisée en ce que** le corps (16-34-46) dudit substrat comporte des veinules (17-31-47), adaptées à en améliorer la perméabilité.

5. Structure de membrane sélectivement perméable à l'hydrogène selon l'une des revendications précédentes, **caractérisée en ce que** ledit substrat (16-30) est un bâtonnet cylindrique (10-24), pourvu à une extrémité d'un collier (20-34) d'évacuation de l'hydrogène extrait et, le cas échéant, équipé d'un collier (22-36) d'alimentation en gaz vecteur, à l'autre extrémité.

6. Structure de membrane selon la revendication 5, **caractérisée en ce que** ledit bâtonnet cylindrique (24 a-b-c) est relativement long et comporte une armature métallique axiale rigide (32 a-b-c), adaptée à lui donner une bonne résistance mécanique.

7. Structure de membrane sélectivement perméable à l'hydrogène, **caractérisée en ce qu'**elle est en forme de grille, de préférence carrée et relativement grande, constituée par un nombre relativement important de bâtonnets selon la revendication 6, disposés à faible distance les uns des autres et montés fixes sur deux poutres transversales creuses (71-73), respectivement affectées à la collecte de l'hydrogène extrait et à l'alimentation en gaz vecteur.

8. Structure de membrane selon la revendication 7, **caractérisée en ce que** ledit bâtonnet relativement long (24c) devant être du genre en doigt de gant avec injection de gaz vecteur, son armature axiale (32c) est creuse et affectée à ladite injection et elle débouche dans une cavité (38) aménagée dans une coupelle (40), soudée à ladite autre extrémité.

9. Structure de membrane sélectivement perméable à l'hydrogène selon l'une des revendications 1 à 4, **caractérisée en ce que** ledit substrat, qui comprend un corps poreux (46) et une couche intermédiaire (44), est une plaque enchâssée étanche dans une bordure métallique (48 a-b), pourvue d'un orifice relié à un conduit (52 a-b) d'évacuation de l'hydrogène extrait et, le cas échéant, à un autre orifice opposé au premier, relié à un conduit d'alimentation en gaz vecteur (50 a-b).

10. Structure de membrane selon la revendication 9, **caractérisée en ce que** ladite plaque possédant des dimensions relativement importantes, ledit substrat est pourvu d'une armature intérieure métallique rigide (49), adaptée à lui donner une bonne résistance mécanique.

11. Processeur de gaz combustible (54-65-91), dans lequel une chambre de réaction (58-66-92) à plasma froid, alimentée dans des conditions adéquates par une cellule de conditionnement (88), fournissant un mélange primaire dudit gaz, de vapeur d'eau et d'air, produit un mélange secondaire formé d'hydrogène, de monoxyde et de dioxyde de carbone, **caractérisé en ce que** :
- ladite chambre (58-66-92) comporte plusieurs structures de membranes sélectivement perméables à l'hydrogène (64-68-94) selon l'une des revendications 1 à 10 ci-dessus, reliées à un collecteur commun d'hydrogène (76), lesdites structures ayant une forme et des dimensions données ;
- au proche voisinage de ces structures, sont disposées une ou plusieurs électrodes pourvues d'une gaine isolante réfractaire (60-62, 68 a-b, 96 a-b), à fort coefficient diélectrique, ayant une forme et des dimensions adaptées à leur permettre d'efficacement coopérer avec lesdites structures, pour constituer un ensemble destiné à produire, en réponse à une alimentation électrique appropriée (84), des décharges électriques barrières générant ledit plasma froid dans les espaces séparant électrodes et structures.

12. Processeur de gaz combustible selon la revendication 11, **caractérisé en ce que** dans la chambre de réaction (65-92), chaque ensemble, formé par une électrode isolée (78 a-c ou 96 a-b) associée à une structure filtrante (68 a-b ou 94), est suivi par un ensemble formé par une électrode isolée (78 b-d) et par un panier (80 a-b ou 98 a-b), contenant des granulés catalyseurs de la réaction dite « water-gas shift » à température élevée.

13. Processeur de gaz, du genre comprenant une chambre de réaction pourvue d'un catalyseur chimique spécifique de la réaction concernée, **caractérisé en ce que** des structures de membranes sélectivement perméables à l'hydrogène selon l'une des revendications 1 à 10, sont disposées au proche voisinage dudit catalyseur.

14. Processeur de gaz combustibles selon les revendications 11 ou 12, **caractérisé en ce que** :
- les structures filtrantes (68 a-b-c-d) et les électrodes isolées (78 a-b-c-d) ont la forme de crayons longs (24 a-b), assemblés en grilles de mêmes dimensions, notamment carrées ;
- lesdites grilles sont constituées par un nombre relativement important de crayons presque jointifs, fixés à deux poutres débordantes (71-73) qui sont soit des conduits d'injection de gaz neutre et d'évacuation d'hydrogène pour les structures filtrantes (68) soit des conducteurs électriques de liaison isolés (79 a-b) pour les électrodes isolées (78), lesdites poutres (71-73) étant adaptées à être montées fixes sur un bâti installé dans la chambre de réaction.

15. Appareil (100) de purification d'hydrogène, **caractérisé en ce qu'**il comprend
- une chambre de filtration (102) constituée par une enveloppe réfractaire (106), calorifugée par une couverture isolante (144), enfermant une ou plusieurs membranes (108_{1...n}) sélectivement perméables à l'hydrogène, du type défini par l'une des revendications 1 à 10 ci-dessus, lesdites membranes étant raccordées à deux conduits communs (110-112), respectivement affectés à l'alimentation en gaz vecteur et à la collecte de l'hydrogène extrait ;
- des moyens de chauffage (118-120-126), de régulation de température (140-142-138) et de compression (130), adaptés à donner au flux d'hydrogène à purifier une température et une pression respectivement situées dans les plages de températures et de pressions correspondant au fonctionnement optimal des membranes (108).

16. Appareil de purification d'hydrogène selon la revendication 15, **caractérisé en ce que** :
- lesdits moyens de chauffage comprennent une chaudière (116) et un brûleur (118), associé à des conduits de chauffage (120), à haute conduction thermique, traversant la chaudière (116) ;
- la chaudière (116) est alimentée en surpression par de l'hydrogène à purifier et elle communique avec la chambre de filtration (102) par une cloison perforée (122) ;
- le brûleur (118) est alimenté par l'hydrogène résiduel, évacué en aval de la chambre de filtration (102) par un conduit de récupération (136), et par de l'air comprimé, fourni par un compresseur (138), dont le débit est sous la dépendance d'un dispositif de régulation (142), contrôlé par un signal délivré par un thermocouple (140), placé dans la chambre de filtration (102) ;
- la cheminée (126) du brûleur (118) possède une section en anneau, elle entoure la chambre de filtration (102) et elle est calorifugée par la couverture isolante (144).

## Claims

1. Improved composite membrane structure selectively permeable to hydrogen (10-24-40) constituted by a continuous filtering film (12-26-42) measuring several microns thick and made of palladium or a palladium-based alloy deposited on a rigid porous refractory substrate (16-30-46) connected to a pipe (20-34-52) for collecting the extracted hydrogen, **characterised in that**:
- said substrate is a permeable sintered metallic body (16-30-46) provided with good mechanical resistance or open pores measuring between several microns and about ten microns ;
- a thin metallic film (14-28-44) known as the intermediate film with a thickness of between twenty and fifty microns and containing open pores smaller than one micron is deposited on the body of the substrate ;
- the body of the substrate and the intermediate film are made of a metal or alloy having within the range of use temperatures and pressures of the structure, heat expansion coefficients in the presence of hydrogen which are both compatible with those of palladium;
- the material constituting the intermediate film has within said range a satisfactory chemical stability with regard to the filtering film and the body of the substrate.

2. Membrane structure selectively permeable to hydrogen according to claim 1, **characterised in that** the heat expansion coefficient of the materials constituting the body of the substrate and the intermediate film is lower than or at the most slightly greater than that of the material constituting the filtering film.

3. Membrane structure selectively permeable to hydrogen according to claim 2, **characterised in that** :
- the ultra-thin filtering film (12-26-42) is made of a palladium-based alloy comprising silver and/or nickel ;
- the sintered body (16-30-46) of said substrate is embodied from a relatively fine powder with appropriate size grading formed from a nickel-based super-alloy comprising chromium and iron and in particular from an Inconel 600 powder ;
- the intermediate film (14-28-44) is embodied from an ultra-fine powder with suitable size grading of nickel or a super-alloy similar to the one used for the body of the substrate ;
- the filtering film is fixed by microwelds to the tops of the surface grains of the intermediate film.

4. Membrane structure selectively permeable to hydrogen according to one of the preceding claims, **characterised in that** the body (16-34-46) of said substrate comprises small veins (17-31-47) adapted to improve its permeability.

5. Membrane structure selectively permeable to hydrogen according to one of the preceding claims, **characterised in that** said substrate (16-30) is a cylindrical rod (10-24) provided at one extremity with a collar (20-34) for evacuating the extracted hydrogen and, if appropriate, equipped with a vector gas feed collar (22-36) at the other extremity.

6. Membrane structure according to claim 5, **characterised in that** said cylindrical rod (24 a-b-c) is relatively long and comprises a rigid axial metallic reinforcement (32 a-b-c) adapted to give it good mechanical resistance.

7. Membrane structure selectively permeable to hydrogen, **characterised in that** it is in the form of a grid, preferably square and relatively large, constituted by a relatively large number of rods according to claim 6, said rods being placed a small distance from one another and mounted fixed on two hollow transversal beams (71-73) respectively allocated to the collection of the extracted hydrogen and vector gas feeding.

8. Membrane structure according to claim 7, **characterised in that** said relatively long rod (24c) is of the glove-finger type with vector gas injection, its axial reinforcement (32c) is hollow and allocated to said injection and opens into a cavity (38) provided in a cupel (40) welded to said other extremity.

9. Membrane structure selectively permeable to hydrogen according to one of claims 1 to 4, **characterised in that** said substrate, which comprises a porous body (46) and an intermediate film (44), is a sealed plate fitted in a metallic border (48 a-b) provided with an orifice connected to a pipe (52 a-b) for evacuating the extracted hydrogen and, if appropriate, to another orifice opposite the first connected to a vector gas feeding pipe (50 a-b).

10. Membrane structure according to claim 9, **characterised in that** said plate has relatively large dimensions, said substrate being provided with a rigid metallic internal reinforcement (49) adapted to give it good mechanical resistance.

11. Combustible gas processor (54-65-91) in which a cold plasma reaction chamber (58-66-92) fed in suitable conditions by a conditioning cell (88) supplying a primary mixture of said gas, water vapour and air provides a secondary mixture formed of hydrogen and carbon dioxide and carbon monoxide, **characterised in that**:
- said chamber (58-66-92) comprises several membrane structures selectively permeable to hydrogen (64-68-94) according to one of claims 1 to 10 and connected to a common hydrogen collector (76), said structures having a given shape and dimensions ;
- placed close to these structures is/are one or several electrodes provided with a nonconducting refractory sheath (60-62, 68 a-b, 96 a-b) having a high dielectric coefficient and an adapted shape and dimensions enabling them to effectively cooperate with said structures so as to constitute a unit intended to produce in response to an appropriate electric power source (84) barrier electric discharges generating said cold plasma in the spaces separating the electrodes and structures.

12. Combustible gas processor according to claim 11, **characterised in that** in the reaction chamber (65-92) each unit formed by an insulated electrode (78 a-c or 96 a-b) associated with a filtering structure (68 a-b or 94) is followed by a unit formed by an insulated electrode (78 b-d) and a basket (80 a-b or 98 a-b) containing catalyst granules for high temperature "water-gas shift" reaction.

13. Gas processor of the type comprising a reaction chamber provided with a chemical catalyst specific to the reaction concerned, **characterised in that** membrane structures selectively permeable to hydrogen according to one of claims 1 to 10 are placed close to said catalyst.

14. Combustible gas processor according to claims 11 or 12, **characterised in that**:
- the filtering structures (68 a-b-c-d) and the insulated electrodes (78 a-b-c-d) have the shape of long pencils (24 a-b) assembled in grids of given dimensions, in particular square ;
- said grids are constituted by a relatively large number of pencils almost touching fixed to two projecting beams (71-73) which are either neutral gas injection and hydrogen evacuation pipes for the filtering structures (68) or electric insulated linking conductors (79 a-b) for the insulated electrodes (78), said beams (71-73) being adapted to be mounted secured to a frame installed in the reaction chamber.

15. Hydrogen purification device (100), **characterised in that** it comprises:
- a filtering chamber (102) constituted by a refractory casing (106) lagged by a nonconducting coating (144) containing one or several membranes (108_{1.....n}) selectively permeable to hydrogen, said device being of the type defined by one of claims 1 to 10, said membranes being connected to two common pipes (110-112) respectively allocated to vector gas feeding and collection of the extracted hydrogen;
- heating (118-120-126), temperature adjustment (140-142-138) and compression (130) means adapted to provide the flow of hydrogen to be purified with a temperature and pressure respectively situated inside pressure and temperature ranges corresponding to the best possible functioning of the membranes (108).

16. Hydrogen purification device according to claim 15, **characterised in that** :
- said heating means comprise a boiler (116) and a burner (118) associated with high thermic conduction heating pipes (120) passing through the boiler (116) ;
- the boiler (116) is fed with excess pressure by the hydrogen to be purified and communicates with the filtering chamber (102) via a perforated wall (122) ;
- the burner (118) is fed by the residual hydrogen evacuated downstream of the filtering chamber (102) by a collecting pipe (136) and by the compressed air provided by a compressor (138) whose flow is dependent on a regulation device (142) controlled by a signal delivered by a thermo couple (140) placed in the filtering chamber (102) ;
- the chimney (126) of the burner (118) has a ring-shaped section, surrounds the filtering chamber (102) and is lagged by the nonconducting coating (144).

## Patentansprüche

1. Weitergebildete Verbundstruktur einer selektiv wasserstoffdurchlässigen Membran, (10-24-40), bestehend aus einer kontinuierlichen Filtrationsschicht (12-26-42), die eine Dicke von einigen Mikronen aufweist und aus Palladium oder einer Legierung auf Basis von Palladium erstellt ist, die auf einem porösen starren feuerbeständigen Substrat abgesetzt (16-30-46) ist, der mit einer Sammelleitung (20-34-52) des extrahierten Wasserstoffs verbunden ist, **gekennzeichnet dadurch, dass**:
- besagter Substrat ein gesinterter durchlässiger Metallkörper (16-30-46) mit einem guten mechanischen Widerstand und offenen Poren ist, die einige Mikronen bis zu etwa zehn Mikronen messen;
- eine dünne Metallschicht (14-28-44), die sogenannte Zwischenschicht, die eine Dicke von etwa zwanzig bis fünfzig Mikronen aufweist und offene Poren von unter einem Mikron einschliesst, wird auf dem Substratkörper aufgetragen;
- der Substratkörper und die Zwischenschicht werden aus einem Metall oder einer Legierung erstellt, die im Bereich der benutzten Temperaturen und Drücke der Struktur Wärmeausdehnungs- und Expansions-Koeffizienten in Gegenwart von Wasserstoff aufweisen, wobei beide mit jenen des Palladiums kompatibel sind;
- das Material, das die Zwischenschicht bildet, weist in besagtem Bereich eine befriedigende chemische Stabilität bezüglich der Filtrationsschicht und des Substratkörpers auf.

2. Struktur einer selektiv wasserstoffdurchlässigen Membran nach Anspruch 1, **gekennzeichnet dadurch, dass** der WärmeausdehnungsKoeffizient der den Substratkörper und die Zwischenschicht bildenden Materialien niedriger, höchstens so hoch, ein wenig höher als jener des die Filtrationsschicht bildenden Materials ist.

3. Struktur der selektiv wasserstoffdurchlässigen Membran nach Anspruch 2, **gekennzeichnet dadurch, dass**:
- die ultradünne Filtrationsschicht (12-26-42) aus einer Legierung auf Basis von Palladium, einschliesslich Silber und/oder Nickel erstellt ist;
- der gesinterte Körper (16-30-46) des genannten Substrats wird aus einem verhältnismäßig feinen Puder mit einer geeigneten Korngrösse vorbereitet, das aus einer Superlegierung auf Basis von Nickel, einschließlich Chrom und Eisen und insbesondere aus einem Puder von Inconel 600 gebildet ist;
- die Zwischenschicht (14-28-44) wird aus einem ultrafeinen Puder mit geeigneter Korngrösse, aus Nickel oder einer dem benutzten Substratkörper ähnlichen Superlegierung vorbereitet;
- die Filtrationsschicht wird durch Mikroschweissungen an die oberflächlichen Kornspitzen der Zwischenschicht fixiert.

4. Struktur einer selektiv wasserstoffdurchlässigen Membran nach einem der vorangehenden Ansprüche, **gekennzeichnet dadurch, dass** der Körper (16-34-46) des besagten Substrats Äderchen (17-31-47) aufweist, die so angepasst sind, um die Durchlässigkeit zu verbessern.

5. Struktur einer selektiv wasserstoffdurchlässigen Membran nach einem der vorangehenden Ansprüche, **gekennzeichnet dadurch, dass** besagter Substrat (16-30) ein zylindrisches Stäbchen (10-24) ist, das an einem Ende mit einer Manschette (20-34) zum Ablassen des extrahierten Wasserstoffs versehen ist und gegebenenfalls mit einer Manschette (22-36) zur Vektorgasversorgung am anderen Ende ausgestattet ist.

6. Membranstruktur nach Anspruch 5, **gekennzeichnet dadurch, dass** besagtes zylindrisches Stäbchen (24 a-b-c) verhältnismäßig lang ist und eine axiale starre Metallarmierung (32 a-b-c) umfasst, die an dasselbe angepasst ist, um ihm einen guten mechanischen Widerstand zu verleihen.

7. Struktur einer selektiv wasserstoffdurchlässigen Membran, **gekennzeichnet dadurch, dass** diese in Form eines Gitters vorliegt, das vorzugsweise viereckig und verhältnismäßig groß ist, bestehend aus einer verhältnismäßig bedeutenden Anzahl von Stäbchen nach Anspruch 6, die auf einer geringen Entfernung voneinander angeordnet und fest auf zwei hohlen Querträgern (71-73) montiert sind, die jeweils zur Sammlung des extrahierten Wasserstoffs und zur Vektorgas-Versorgung bestimmt sind.

8. Membranstruktur nach Anspruch 7, **gekennzeichnet dadurch, dass** besagtes verhältnismäßig langes Stäbchen (24c) in der Art eines Handschuhfingers mit Vektorgasinjektion vorliegen soll, seine axiale Armierung (32c) ist hohl und für besagte Injektion bestimmt und sie mündet in einem Hohlraum (38) der in einer Schale (40) eingerichtet ist, die am besagten anderen Ende verschweißt ist.

9. Selektiv wasserdurchlässige Membranstruktur gemäss einem der Ansprüche 1 bis 4, **gekennzeichnet dadurch, dass** besagter Substrat, der einen porösen Körper (46) und eine Zwischenschicht (44) umfasst, eine Platte ist, die dicht in einem Metallrand (48 a-b) eingefasst ist, der mit einer Öffnung versehen ist, die mit einer Leitung (52 a-b) zum Ablassen des extrahierten Wasserstoffs und gegebenenfalls mit einer anderen der ersten Öffnung gegenüberliegenden Öffnung verbunden ist, die mit einer Vektorgas-Versorgungsleitung (50 a-b) verbunden ist.

10. Membranstruktur nach Anspruch 9, **gekennzeichnet dadurch, dass** besagte Platte verhältnismäßig bedeutende Dimensionen besitzt, besagter Substrat mit einer starren inneren Metallarmierung (49) versehen ist, die so daran angepasst ist, um ihm einen guten mechanischen Widerstand zu verleihen.

11. Brenngasprozessor (54-65-91), in welchem eine Reaktionskammer (58-66-92) mit kaltem Plasma, die unter den passenden Verhältnissen durch eine Konditionierungszelle (88) versorgt wird, indem sie eine Primärmischung des genannten Gases aus Wasserdampf und Luft aufbringt, eine sekundäre Mischung aus Wasserstoff, Kohlenmonoxid und -dioxid erzeugt, **gekennzeichnet dadurch dass**:
- besagte Kammer (58-66-92) umfasst mehrere Strukturen von selektiv wasserstoffdurchlässigen Membranen (64-68-94) nach einem der obengenannten Ansprüche 1 bis 10, die mit einem gemeinsamen Wasserstoffkollektor (76) verbunden sind, wobei besagte Strukturen die gegebene Form und Dimensionen aufweisen;
- in unmittelbarer Nähe dieser Strukturen sind eine oder mehrere Elektroden angeordnet, die mit einem feuerbeständigen Isoliermantel (60-62, 68 a-b, 96 a-b) mit einem starken dielektrischen Koeffizienten versehen sind, die eine Form und Dimensionen aufweisen, die so angepasst sind, um ihnen zu gestatten, wirksam mit besagten Strukturen zusammenzuwirken, um eine Einheit zu bilden, die dazu bestimmt ist, als Erwiderung auf eine angemessene elektrische Stromversorgung (84) Barrieren von elektrischen Entladungen zu bilden, indem besagtes kaltes Plasma in den Räumen erzeugt wird, die die Elektroden und Strukturen trennen.

12. Brenngasprozessor nach Anspruch 11, **gekennzeichnet dadurch, dass** in der Reaktionskammer (65-92) jede Einheit, die aus einer isolierten Elektrode (78 a-c oder 96 a-b) gebildet ist, die einer Filtrierstruktur (68 ab oder 94) zugeordnet ist, gefolgt von einer aus einer isolierten Elektrode (78 b-d) und aus einem Korb (80 a-b oder 98 a-b) gebildeten Einheit, die katalytische Granulate der sogenannten «Wasser-Gas Shift»- Reaktion mit erhöhter Temperatur enthält.

13. Gasprozessor, der eine Reaktionskammer umfasst, die mit einem spezifischen chemischen Katalysator der betroffenen Reaktion versehen ist, **gekennzeichnet dadurch, dass** die Strukturen von selektiv wasserstoffdurchlässigen Membranen nach einem der Ansprüche 1 bis 10 in unmittelbarer Nähe des genannten Katalysators angeordnet sind.

14. Brennstoffgasprozessor nach den Patentansprüchen 11 oder 12, **gekennzeichnet dadurch, dass**:
- die filtrierenden Strukturen (68 a-b-c-d) und die isolierten Elektroden (78 a-b-c-d) die Form von langen Stiften (24 a-b) aufweisen, die in Gittern derselben Dimensionen, insbesondere viereckig, zusammengebaut sind;
- besagte Gitter sind aus einer verhältnismäßig bedeutenden Zahl von fast aneinander gesetzten Stiften gebildet, die an zwei auslaufenden Trägern (71-73) befestigt sind, die entweder Neutralgasinjektionsleitungen und Wasserstoffablassleitungen für die filtrierenden Strukturen (68) oder isolierte elektrische Verbindungsleiter (79 a-b) für die isolierten Elektroden (78) sind, wobei besagte Träger (71-73) so angepasst sind, um fest auf einen in der Reaktionskammer installierten Ständer aufgebaut zu werden.

15. Wasserstoffreinigungsgerät (100), **gekennzeichnet dadurch, dass** es folgendes umfasst:
- eine aus einer feuerbeständigen Umhüllung (106) bestehende Filtrationskammer (102), die durch eine isolierte Abdeckung (144) wärmeisoliert ist, die eine oder mehrere selektiv wasserstoffdurchlässige Membrane (108_{1...n}) einschliesst, in der durch einen der Patentansprüche 1 bis 10 oben definierten Art, wobei besagte Membrane an zwei gemeinsame Leitungen (110-112) angeschlossen sind, die jeweils für die Vektorgas-Versorgung und die Sammlung des extrahierten Wasserstoffs bestimmt sind;
- Heizmittel (118-120-126), Temperaturregelungsmittel (140-142-138) und Kompressionsmittel (130), die so angepasst sind, um dem zu reinigenden Wasserstoffstrom eine Temperatur und einen Druck zu geben, die in den Temperatur- und Druckbereichen liegen, die dem optimalen Betrieb der Membrane (108) entsprechen.

16. Wasserstoffreinigungsgerät nach Anspruch 15, **gekennzeichnet dadurch, dass:**
- besagte Heizmittel einen Kessel (116) und einen Brenner (118) umfassen, die den Heizleitungen (120) mit hoher thermischen Leitung, die durch den Kessel (116) hindurch führen, zugeordnet sind;
- der Kessel (116) wird vom zu reinigenden Wasserstoff im Überdruck versorgt und er ist mit der Filtrationsskammer (102) über eine gelochte Scheidewand (122) verbunden;
- der Brenner (118) wird vom restlichen Wasserstoff gespeist, der abwärts aus der Filtrationskammer (102) durch eine Rücklaufleitung (136) und durch die Druckluft ausgeleert wird, die von einen Kompressor (138) zugeführt wird, dessen Durchflussleistung von einer Regelungsvorrichtung (142) abhängt und die über ein Signal kontrolliert wird, das von einem Thermoelement (140) ausgegeben wird, das in der Filtrationskammer (102) plaziert ist;
- der Kamin (126) des Brenners (118) besitzt einen Ringabschnitt, dieser umgibt die Filtrationskammer (102) und sie ist durch die isolierte Decke (144) wärmebeständig.
